Europäisches Patentamt

European Patent Office

Office européen des brevets

(19)

(11) Publication number: **0 096 996**
**B1**

(12) **EUROPEAN PATENT SPECIFICATION**

(45) Date of publication of patent specification: **22.06.88**

(51) Int. Cl.⁴: **C 10 G 3/00**

(21) Application number: **83303106.5**

(22) Date of filing: **31.05.83**

(54) Process for the conversion of alcohols into petrochemicals.

(30) Priority: **15.06.82 US 388768**

(43) Date of publication of application:
**28.12.83 Bulletin 83/52**

(45) Publication of the grant of the patent:
**22.06.88 Bulletin 88/25**

(84) Designated Contracting States:
**BE DE FR GB IT NL**

(56) References cited:
**US-A-4 197 418**
**US-A-4 328 384**

(73) Proprietor: **MOBIL OIL CORPORATION**
**150 East 42nd Street**
**New York New York 10017 (US)**

(72) Inventor: **Yurchak, Sergei**
**211 Timber Jump Lane**
**Media Pennsylvania 19063 (US)**
Inventor: **Lee, Wooyoung**
**4 Cohasset Land**
**Cherry Hill New Jersey 08003 (US)**

(74) Representative: **Cooper, John Anthony et al**
**Mobil Court 3 Clements Inn**
**London WC2A 2EB (GB)**

Courier Press, Leamington Spa, England.

## Description

This invention relates to the conversion of alcohols, especially methanol, into petrochemicals over zeolite catalyst in fluidized bed reactors.

The application of fluidized catalyst techniques developed particularly in the petroleum industry for effecting chemical reaction embodying the distribution of heat and/or the disposal of undesired heat has long been accepted as a major processing tool of the industry. For example, the catalytic cracking of oil vapors to produce lower boiling desired products and regeneration of the catalyst used in such an operation has been particularly useful for fluidized catalyst techniques. It has also been proposed to use the fluidized catalyst technique in the highly exothermic reactions of Fischer-Tropsch synthesis and the known Oxo process primarily for the disposal of generated heat. In the fluidized catalyst operations developed, disposal of the reaction heat has been accomplished by many different techniques including transfer of catalyst through cooling sections and/or indirect cooling with a fluid bed of catalyst to absorb reaction heat transferred by the finely divided fluidized catalyst particles. Not only is the fluidized catalyst technique used for temperature control by addition and/or removal of heat but it has also been found useful for extending the active life of the catalyst used in such processes.

US—A—4 328 384 discloses a process for converting alcohols and related oxygenates to $C_{10}$ and lower boiling hydrocarbon compounds. The process comprises passing a suspension of vaporised reactant material and fluid catalyst particles through a catalyst phase riser contact zone to achieve up to 70% conversion of the alcohol in the feed and further reacting the products to achieve at least 90% conversion of the feed alcohol to produce $C_1$—$C_{10}$ hydrocarbons.

According to the invention, there is provided a process for converting reactants comprising lower alcohols and related oxygenates into a product mixture comprising light olefins and $C_5^+$ gasoline boiling components, which comprises passing a suspension of vaporised reactant material and fluid catalyst particles comprising a crystalline zeolite upwardly through a dispersed catalyst contact and reaction zone at a temperature from 260 to 510°C to achieve at least 40% but less than 90% conversion of the alcohol in the feed.

The crystalline aluminosilicate zeolites used in the process are members of a class of zeolites that exhibits unusual properties. Although these zeolites have unusually low alumina contents, i.e. high silica to alumina ratios, they are very active even when the silica to alumina ratio exceeds 30. The activity is surprising, since catalytic activity is generally attributed to framework aluminum atoms and/or cations associated with these aluminum atoms. These zeolites retain their crystallinity for long periods in spite of the presence of steam at high temperature which induces irreversible collapse of the framework of other zeolites, e.g. of the X and A type. Furthermore, carbonaceous deposits, when formed, may be removed by burning at higher than usual temperatures to restore activity. These zeolites, used as catalysts, generally have low coke-forming activity and therefore are conducive to long times on stream between regenerations by burning with oxygen-containing gas such as air.

An important characteristic of this class of zeolites is that its crystal structure provides constrained access to and egree from the intracrystalline free space by virtue of having an effective pore size intermediate between the small pore Linde A and the large pore Linde X, i.e. the pore windows of the structure have about a size such as would be provided by 10-membered rings of oxygen atoms. It is to be understood, of course, that these rings are those formed by the regular disposition of the tetrahedra making up the anionic framework of the crystalline aluminosilicate, the oxygen atoms themselves being bonded to the silicon or aluminum atoms at the centers of the tetrahedra. Briefly, the preferred type zeolites useful in this invention possess, in combination: a silica to alumina mole ratio of at least 12; and a structure providing constrained access to the crystalline free space.

The silica to alumina ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a silica to alumina ratio of at least 12 are useful, it is preferred to use zeolites having higher ratios of at least 30. Such zeolites, after activation, acquire an intracrystalline sorption capacity for normal hexane which is greater than that for water, i.e. they exhibit "hydrophobic" properties. It is believed that this hydrophobic character is advantageous in the present invention.

The zeolites useful in this invention have an effective pore size such as to freely sorb normal hexane. In addition, the structure must provide constrained access to larger molecules. It is sometimes possible to judge from a known crystal structure whether such constrained access exists. For example, if the only pore windows in a crystal are formed by 8-membered rings of oxygen atoms, then access by molecules of larger cross-section than normal hexane is excluded and the catalytic activity of the zeolite may be somewhat limited. Windows of 10-membered rings are preferred, although in some instances excessive puckering of the rings or pore blockage may render these zeolites ineffective. Twelve-membered rings usually do not offer sufficient constraint to produce the advantageous conversions, although the puckered 12-ring structure of TMA offretite shows constrained access. Other 12-ring structures may exist which, due to pore or to other cause, may be operative.

Rather than attempt to judge from crystal structure whether or not a zeolite possesses the necessary constrained access to molecules larger than normal paraffins, a simple determination of the "Constraint Index" as herein defined may be made by passing continuously a mixture of an equal weight of normal hexane and 3-methylpentane over a small sample, approximately one gram or less, of zeolite at atmospheric pressure according to the following procedure. A sample of the zeolite, in the form of pellets or extrudate, is crushed to a particle size about that of coarse sand and mounted in a glass tube. Prior to testing, the zeolite is treated with a stream of air at 538°C for at least 15 minutes. The zeolite is then flushed with helium and the temperature adjusted between 288°C and 510°C to give an overall conversion between 10% and 60%. The mixture of hydrocarbons is passed at 1 liquid hourly space velocity (i.e., 1 volume of liquid hydrocarbon per volume of zeolite per hour) over the zeolite with a helium dilution to give a helium to total hydrocarbon mole ratio of 4:1. After 20 minutes on stream, a sample of the effluent is taken and analyzed, most conveniently by gas chromatography, to determine the fraction remaining unchanged for each of the two hydrocarbons.

The "Constraint Index" is calculated as follows:

$$\text{Constraint Index} = \frac{\log_{10}\ (\text{fraction of n-hexane remaining})}{\log_{10}\ (\text{fraction of 3-methylpentane remaining})}$$

The Constrant Index approximates the ratio of the cracking rate constants for the two hydrocarbons. Certain zeolites suitable for the present invention are those having a Constraint Index of 1 to 12. Constraint Index (CI) values for some typical zeolites are:

| Zeolite | C.I. |
| --- | --- |
| ZSM-5 | 8.3 |
| ZSM-11 | 8.7 |
| ZSM-12 | 2 |
| ZSM-35 | 4.5 |
| ZSM-38 | 2 |
| TMA Offretite | 3.7 |
| Beta | 0.6 |
| ZSM-4 | 0.5 |
| H-Zeolon (mordenite) | 0.4 |
| REY | 0.4 |
| Amorphous silica-alumina (non-zeolite) | 0.6 |

The above-described Constraint Index is one parameter of some particular zeolites which are useful in the invention. The very nature of this parameter and the recited technique by which it is determined, however, admit of the possibility that a given zeolite can be tested under somewhat different conditions and thereby have different Constraint Indexes. Constraint Index seems to vary somewhat with severity of operation (conversion) and the presence or absence of binders. Therefore, it will be appreciated that it may be possible to so select test conditions to establish more than one value in the range of 1 to 12 for the Constraint Index of a particular zeolite. Such a zeolite exhibits the constrained access as herein defined and is to be regarded as having a Constraint Index of 1 to 12. Also contemplated herein as having a Constraint Index of 1 to 12 and therefore within the scope of the novel class of highly siliceous zeolites are those zeolites which, when tested under two or more sets of conditions within the above specified ranges of temperature and conversion, produce a value of the Constraint Index slightly less than 1, e.g. 0.9, or somewhat greater than 12, e.g. 14 or 15, with at least one other value of 1 to 12. Thus, it should be understood that the Constraint Index value as used herein is an inclusive rather than an exclusive value. That is, a zeolite when tested by any combination of conditions within the testing definition set forth hereinabove to have a Constraint Index of 1 to 12 is intended to be included in the instant catalyst definition regardless that the same identical zeolite tested under other defined conditions may give a Constraint Index value outside of 1 to 12.

This class of zeolites is exemplified by ZSM-5, ZSM-11, ZSM-12, ZSM-34, ZSM-35, ZSM-38, and other similar materials. U.S. Patent 3,702,886 describes ZSM-5; ZSM11 is described in U.S. Patent 3,709,979; ZSM-12 is described in U.S. Patent 3,832,449; ZSM-34 is described in U.S. Patent 4,086,186; ZSM-35 is described in U.S. Patent 4,016,245; and ZSM-38 is described in U.S. Patent 4,046,859.

The specific zeolites described, when prepared in the presence of organic cations, are substantially catalytically inactive, possibly because the intracrystalline free space is occupied by organic cations from the forming solution. They may be activated by heating in an inert atmosphere at 538°C for 1 hour, for example, followed by base exchange with ammonium salts followed by calcination at 538°C in air. The presence of organic cations in the forming solution may not be absolutely essential to the formation of this type zeolite; however, the presence of these cations does appear to favor the formation of this special class of zeolite. More generally, it is desirable to activate this type catalyst by base exchange with ammonium salts followed by calcination in air at 538°C for from 15 minutes to 24 hours.

Natural zeolites may sometimes be converted to this type zeolite catalyst by various activation procedures and other treatments such as base exchange, steaming, alumina extraction and calcination, in combinations. Natural minerals which may be so treated include ferrierite, brewsterite, stilbite, dachiardite, epistilbite, heulandite, and clinoptilolite. The preferred crystalline aluminosilicates are ZSM-5, ZSM-11, ZSM-12, ZSM-34, ZSM-35, and ZSM-38, with ZSM-5 being particularly preferred.

In a preferred aspect of this invention, the zeolites are selected as those having a crystal framework density, in the dry hydrogen form, of not less than 1.50 grams per cubic centimeter. It has been found that zeolites which satisfy all three of these criteria are most desired for several reasons. When hydrocarbon products or by-products are catalytically formed, for example, such zeolites tend to maximize the production of gasoline boiling range hydrocarbon products. Therefore, the preferred zeolites are those having a Constraint Index as defined above of 1 to 12, a silica to alumina ratio of at least 12 and a dried crystal density of not less than 1.6 grams per cubic centimeter. The dry density for known structures may be calculated from the number of silicon plus aluminum atoms per 1000 cubic Angstroms, as given, e.g., on Page 19 of the article on Zeolite Structure by W. M. Meier. This paper, the entire contents of which are incorporated herein by reference, is included in "Proceedings of the Conference on Molecular Sieves, London, April 1967", published by the Society of Chemical Industry, London, 1968. When the crystal structure is unknown, the crystal framework density may be determined by classical pyknometer techniques. For example, it may be determined by immersing the dry hydrogen form of the zeolite in an organic solvent which is not sorbed by the crystal. Or, the crystal density may be determined by mercury porosimetry, since mercury will fill the interstices between crystals but will not penetrate the intracrystalline free space. It is possible that the unusual sustained activity and stability of this class of zeolites is associated with its high crystal anionic framework density of not less than 1.6 grams per cubic centimeter. This high density must necessarily be associated with a relatively small amount of free space within the crystal, which might be expected to result in more stable structures. This free space, however, is important as the locus of catalytic activity.

Crystal framework densities of some typical zeolites are:

| Zeolite | Void volume | Framework density |
|---|---|---|
| Ferrierite | 0.28 cc/cc | 1.76 g/cc |
| Mordenite | 0.28 | 1.7 |
| ZSM-5, 11 | 0.29 | 1.79 |
| Dachiardite | 0.32 | 1.61 |
| L | 0.32 | 1.61 |
| Clinoptilolite | 0.34 | 1.71 |
| Laumontite | 0.34 | 1.77 |
| ZSM-4 (Omega) | 0.38 | 1.65 |
| Heulandite | 0.39 | 1.69 |
| P | 0.41 | 1.57 |
| Offretite | 0.40 | 1.57 |
| Levynite | 0.40 | 1.54 |
| Erionite | 0.35 | 1.51 |
| Gmelinite | 0.44 | 1.46 |
| Chabazite | 0.47 | 1.45 |
| A | 0.5 | 1.3 |
| Y | 0.48 | 1.27 |

The ZSM-5 has a crystal size of 0.5 to 4 micrometers and has been pretreated by steaming.

**0 096 996**

When synthesized in the alkali metal form, the zeolite is conveniently converted to the hydrogen form, generally by intermediate formation of the ammonium form as a result of ammonium ion exchange and calcination of the ammonium form to yield the hydrogen form. In addition to the hydrogen form, other forms of the zeolite wherein the original alkali metal has been reduced to less than 1.5% by weight may be used. Thus, the original alkali metal of the zeolite may be replaced by ion exchange with other suitable ions of Groups IB to VIII of the Periodic Table, including, by way of example, nickel, copper, zinc, palladium, calcium or rare earth metals.

In practicing the desired conversion process, it may be desirable to incorporate the above described crystalline aluminosilicate zeolite in another material resistant to the temperature and other conditions employed in the process. Such matrix materials include synthetic or naturally occurring substances as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-beryllia, silica-titania as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix on an anhydrous basis may vary widely, with the zeolite content ranging from between 1 to 99% by weight and more usually in the range of 5 to 80% by weight of the dry composite.

The process of the invention is particularly concerned with the conversion of methanol into light olefins rich in ethylene and $C_5+$ hydrocarbon products. Subsequent to the separation of ethylene, propylene and butenes are converted into olefinic gasoline and olefinic distillate. The distillate product may be subsequently treated with hydrogen to produce a high quality diesel and/or jet fuel.

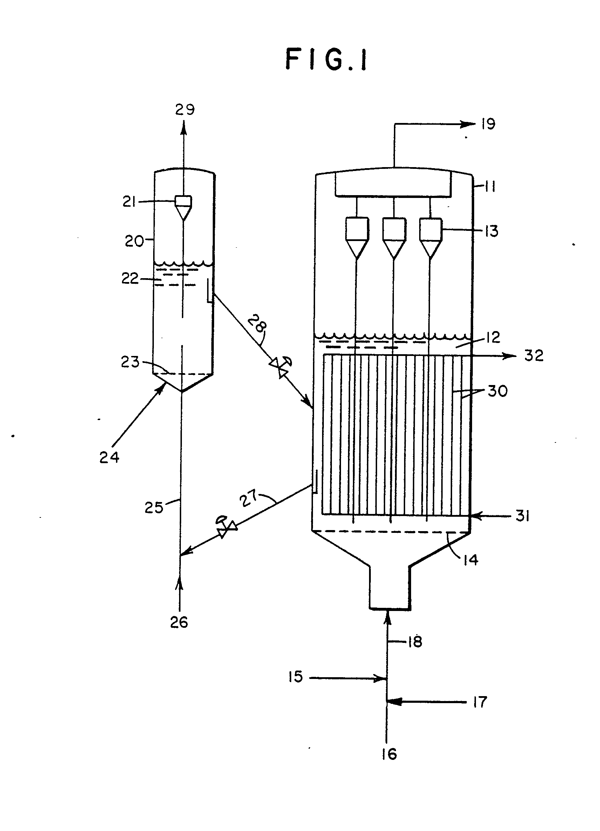

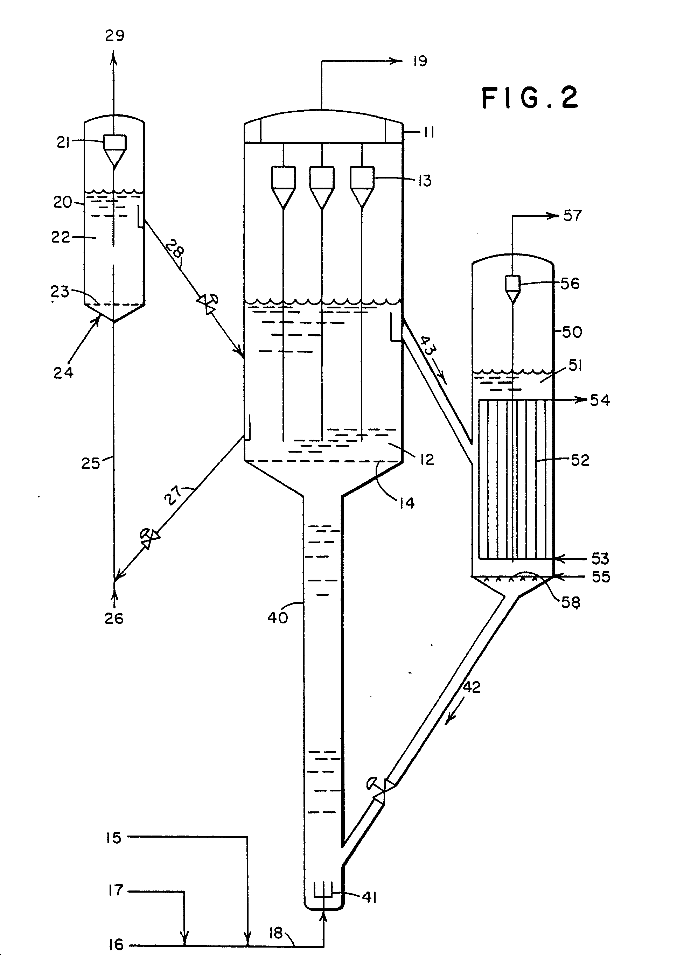

More particularly, the process is concerned with the production of light olefins from methanol. This conversion step requires operation at partial conversion of methanol in order to maximize the yields of light olefins. Particularly suitable fluid bed reactor designs are presented in Figures 1 and 2 of the accompanying drawings and may be employed for carrying out the conversion process. However, it will be understood it is also possible to carry out the conversion process of the invention in fixed bed reactors, for example, tubular, multi-stage adiabatic with interstage cooling, or radial reactors.

Although the prior art is replete with procedures for the conversion of methanol into gasoline, the operation of a fluidized bed at conditions to achieve partial conversion of methanol to light olefins has not hitherto been described.

In accordance with the invention, it is preferred that methanol conversion exceeds 40%, but is preferably less than 90%. It has been found that at these conversion levels it is not nearly as essential to maintain close proximity to plug flow with respect to the gas phase as it becomes at high conversion levels, e.g. at levels of 99% conversion and above. Consequently, the need for baffling the inside of the reactors is not absolutely essential, although it may be desirable under certain circumstances.

Figure 1 of the accompanying drawings illustrates a schematic diagram of a fluid bed reactor design for partial conversion of methanol. In this design, the heat of reaction is removed by generation of steam by means of passing boiler feed water through tubes located directly in the dense phase fluid bed where substantial chemical reaction is occurring. The heat exchanger tubes may be arranged horizontally or vertically. Fresh methanol feed is mixed with recycled methanol and dimethylether (DME) and small amounts of water and enters the reactor as vapor. Feed temperatures are typically 170 to 370°C. The feed passes through a distributor which ensures uniform distribution of reactant across the reactor cross section. Gas superficial velocities are in the range of 0.15 to 0.9 m/sec., and space velocity (WHSV) based on methanol is about 0.2 to 3.0. Operating pressure is 170 to 515 kPa at reactor inlet. The reactor operating temperature is in the range of 260 to 510°C, preferably 315 to 370°C. For temperatures higher than 400 to 430°C, a significantly lower activity catalyst must be used.

The feed contacts the catalyst and is partially converted into a mixture of hydrocarbons rich in light olefins, particularly ethylene. Suitable catalysts comprise members of the ZSM-5 class of zeolites, particularly those with relatively large crystal size. The zeolite may be presteamed or unsteamed. Also, it may be partially exchanged or impregnated, e.g. NaZSM-5, P-Mg-ZSM-5, or it may contain intracrystalline silica. Heat is liberated by the conversion process and is removed by passing coolant through the heat exchanger tubes located in the fluid bed. Suitable coolants are organic liquids and boiler feed water. There is relatively little need to place additional baffles in the reactor, since the heat exchanger tubes serve this purpose well. Entrained catalyst is recovered by multi-stage cyclones and the cleaned product vapors pass to a product receiving system. Catalyst activity is maintained constant by withdrawing a small amount of catalyst continuously from the reaction zone and transporting it to a regenerator where some of the coke is removed by combustion with air at temperatures of 454 to 482°C. Additional air for regeneration can enter through a distributor located in the regenerator. Regenerated catalyst is returned to the reaction zone.

5

An alternative method of heat removal is shown in Figure 2 where the heat of reaction is removed by circulating hot catalyst from the reaction zone to a catalyst cooler which contains heat exchange tubes. The catalyst is cooled sufficiently to remove most of the reaction heat generated in the reaction zone by conversion of methanol (or methanol equivalent) to hydrocarbons. A small amount of fluidizing gas may be added to the bottom of a riser mixing zone where it contacts feed and is passed at relatively high velocity up the riser (flow of feed and catalyst is upward) and is distributed over the cross section of the reaction zone. It is not absolutely essential to incorporate baffles (vertical or horizontal orientation) into the reactor as conversion levels are moderate (40—90%).

Reaction zone temperatures are in the range of 260 to 510°C and preferably 315 to 370°C. At high temperatures, the catalyst activity must be lowered significantly. Sufficient catalyst is circulated to the cooler to effect a 28 to 83°C drop in catalyst temperature as it passes through the cooler. The ratio of circulated catalyst to methanol feed is suitably less than 20 kg catalyst per kg feed. It is desirable for the exit temperature of catalyst in the cooler not to be below 260°C and preferably not below 288°C. Other process conditions are as before for the reactor design given in Figure 1.

For both designs, it is desired to produce a reactant contact time of about 10—20 seconds. Thus, for example, at a gas velocity of 0.45 m/sec in the reaction zone, the height of the catalyst bed in the reaction zone should be 4.5 to 9 m.

Upon leaving the fluid bed reactor, the product vapors are cooled to 38°C at which point there exists three phases: (1) a gas phase containing most of the light olefins and most of the unreacted DME, (2) a hydrocarbon liquid phase rich in heavier hydrocarbons, and (3) an aqueous phase containing most of the unconverted methanol.

The methanol in the aqueous phase can be recovered by distillation to produce a bottoms stream containing only small quantities of methanol (0.5 wt.%) and an overhead stream rich in methanol. The overhead stream is returned to the fluid bed reactor.

Dimethylether can be recovered from the gas phase product by compression and absorption into a methanol stream, which may be methanol feed. After removal of DME, light olefins can be obtained by conventional methods.

The hydrocarbon liquid is relatively lean in light olefins. They could be recovered if desired. The remaining $C_5+$ gasoline can be mixed with $C_5+$ hydrocarbons recovered from the gas phase product to produce a gasoline product after blending in some $C_4$'s.

Alternatively, the hydrocarbon product can be separated into a $C_5+$ fraction and a $C_4-$ fraction. The $C_4-$ fraction could also be processed in a separate olefin conversion process to produce an olefinic gasoline ($C_5-166°C$) and an olefinic distillate. The amount of desired light olefins produced as final products can be adjusted by sending only portions of the $C_4-$ fraction to the olefin conversion process. For example, if it is desired to produce large amounts of ethylene as a final product, then only the $C_3—C_4$ portion of the $C_4-$ fraction would be sent to the olefin conversion process. It is not necessary to feed purified olefins to the olefin conversion process, i.e. the olefinic feed to the olefin conversion process may also contain the corresponding paraffinic components. The olefinic distillate produced by the olefin conversion process can be hydrogenated in a separate vessel to produce a high quality diesel/jet fuel. The yield of olefinic distillate produced by the olefin conversion process can be improved by recycling the olefinic gasoline ($C_5-149°C$) produced by the olefin conversion process back to said process.

A variation of the above is to recover the ethylene made prior to processing the $C_3—C_4$ fraction to gasoline and distillate by the olefin conversion process.

Referring now to Figure 1, for a more specific embodiment of the apparatus and process of the present invention, there is shown a substantially vertical and elongated vessel 11 which contains a dense fluidized bed of catalyst 12. The vessel also contains gas distribution grid 14, gas/solid separation devices (cyclones) 13 and heat transfer surfaces 30. Fresh methanol feed enters through line 16 and mixes with recycled methanol 17 and recycled dimethyl ether 15. The combined feed enters the fluid bed reactor vessel 11 by conduit 18 and passes into gas distribution grid 14 which serves to ensure uniform distribution of gas over the cross-section of vessel 11. The combined feed then contacts catalyst in the dense fluid bed 12 where the methanol and dimethyl ether react to form olefin-rich hydrocarbons and water. The conversion of methanol and dimethyl ether to hydrocarbons and water is limited to the range of 40—90%. Temperatures in dense fluid bed are maintained in the range of 260 to 510°C and preferably 315 to 370°C. The contact time in the dense fluid bed is in the range of 5—40 seconds and preferably 10—20 seconds. At the gas velocities employed in the dense fluid bed 12 (0.15 to 0.9 m/sec), a substantial quantity of solid catalyst is carried upward above the surface of the fluid bed 12. Catalyst is separated from the product vapors by cyclones 13. The separated catalyst is returned by cyclone dip legs to the fluid bed 12. The separated product vapors containing olefin-rich hydrocarbons, unreacted methanol and dimethyl ether, water, and small amounts of by-product gases leave the vessel 11 through conduit 19 and then go to suitable product recovery facilities. The conversion of methanol and dimethyl ether to hydrocarbons and water is exothermic. The exothermic heat is removed in the embodiment shown in Figure 1 by directly immersing heat transfer surfaces 30 into the fluid bed. The heat may be removed by circulating boiler feed water to the heat exchange tubes 30 via line 31 and removing steam via line 32 from the heat exchanger. Organic liquids could also be used as the heat transfer medium instead of boiler feed water. The heat exchange tubes may be oriented vertically or horizontally. The heat exchange tubes 30 also served to minimize bubble growth, but at the conversion levels for this invention, this feature is not critical.

Also shown in Figure 1 is equipment for continuously regenerating the catalyst. A stream of catalyst is removed continuously from fluid bed 12 by conduit 27 and mixed with air or other gas (e.g. nitrogen) from line 26 and the combined mixture is transported to a regenerator vessel 20 by the lift line 25 which terminates in fluid bed 22. Fluid bed 22 operates in a temperature range of 454 to 482°C. Vessel 20 is equipped with a distributor grid 23 through which additional regeneration air (diluted or undiluted with inert gas, e.g., nitrogen) passes. This air enters vessel 20 via line 24. The products of combustion are separated from entrained catalyst by cyclone separators 21. The separated catalyst is returned to the fluid bed 22 and combustion products leave vessel 20 via line 29. Regenerated catalyst is returned to fluid bed 12 from vessel 20 via conduit 28.

A variant on the design shown in Figure 1 is shown in Figure 2. The major differences between the designs shown in Figures 1 and 2 is that in the design of Figure 2 the removal of the reaction heat is carried out in a vessel 50 which is external to the fluid bed reactor 11 and the addition of a dilute phase riser 40 to the fluid bed reactor 11. Methanol feed enters by line 16 and mixes with recycled methanol 17 and recycled dimethyl ether 15 to form a combined feed 18 which enters nozzle 41 located near the bottom of riser 40. The combined feed contacts cooled catalyst returning from catalyst cooler 50 via conduit 42 and the mixture flows at higher velocity (2.4 to 15.3 m/sec) up riser 40 and enters fluid bed reactor 11. Due to the conditions existing the riser, conversion of methanol and dimethyl ether to hydrocarbons and water is low. The mixture passes through distributor 14 which serves to distribute the gas/solid mixture uniformly across the cross-section of fluid bed reactor 11. The conversion of methanol and dimethyl ether to hydrocarbons and water occurs mainly in dense fluid bed 12, which is operated in the temperature range of 260 to 510°C and preferably 315 to 370°C. The contact time in the dense fluid bed 12 is in the range of 5—40 seconds and preferably 10—20 seconds. The conversion of methanol and dimethyl ether to hydrocarbons and water is in the range or 40 to less than 90%. At the gas velocities employed in the dense fluid bed 12 (0.15 to 0.9 m/sec), a significant amount of catalyst is entrained in the product vapors. The entrained catalyst is separated from the product vapors in cyclones 13 with the separated catalyst being returned to dense fluid bed 12 and separated product vapors consisting of olefin-rich hydrocarbons, water, unreacted methanol, unreacted dimethyl ether, and small amounts of by-products leaving fluid bed reactor 11 via line 19 to product recovery.

Hot catalyst is removed from the dense fluid bed 12 of fluid bed reactor via line 43 and passed into catalyst cooler 50 in which fluid bed 51 is maintained. Catalyst cooler 50 contains heat exchange tubes 52 which serve to cool the catalyst and remove the heat of reaction by circulating boiler feed water 53 into them and generating high pressure steam which is removed by line 54. An organic liquid medium may be used instead of boiler feed water for heat removal purposes. Fluid bed 51 is maintained in a fluidized state by introduction of fluidizing gas 55 into distributor 58 contained in catalyst cooler 50. The fluidizing gas 55 may be light hydrocarbon product gas of nitrogen. Entrained catalyst is separated from the fluidizing gas by cyclones 56. The separated catalyst is returned to fluid bed 51, and the fluidizing gas leaves the catalyst cooler via line 57. The fluidizing gas exiting by line 57 contains some unreacted feed and products of reaction which can be recovered in the product recovery system. The cooled catalyst leaves the catalyst cooler 50 via line 42 and enters the bottom of the riser 40. The catalyst cooler is designed to decrease the temperature of the hot catalyst entering via line 43 by 28 to 83°C. The quantity circulated catalyst is typically less than 20 kg of catalyst per kg of methanol feed 16. There may be more than one catalyst cooler vessel 50 per fluid bed reactor 11.

As shown in Figure 2 is a regenerator vessel 20 which serves to regenerate catalyst from fluid bed 12 to maintain constant catalyst activity. A stream of catalyst is removed continuously from fluid bed 12 by conduit 27 and mixed with air or other gas (e.g. nitrogen) from line 26 and the combined mixture is transported to a regenerator vessel 20 by the lift line 25 which terminates in fluid bed 22, which operates in a temperature range of about 454 to 482°C. Vessel 20 is equipped with a distributor grid 23 through which additional regeneration air (diluted or undiluted with inert gas, e.g. nitrogen) passes. This air enters vessel 20 via line 24. The products of combustion are separated from entrained catalyst by cyclone separators 21. The separated catalyst is returned to the fluid bed 22 and combustion products leave vessel 20 via line 29. Regenerated catalyst is returned to fluid bed 12 from vessel 20 via line 28.

Typical product yields from conversion of methanol to light olefins in accordance with the process of the present invention are shown in Table 1.

TABLE 1
Conversion of methanol to light olefins over fluid ZSM-5
(Feed is 83 wt.% methanol in water)

| Crystallite size | Large crystal | Small crystal | |
|---|---|---|---|
| Temperature, °C | 343 | 399 | 399 |
| Pressure, kPa | 275 | 275 | 275 |
| Methanol, WHSV | 0.5 | 2.1 | 2.1 |
| Conversion, % | 66 | 70 | 88 |
| Product yield, wt.% Hydrocarbons | 24.0 | 25.4 | 32.0 |
| Water | 52.8 | 53.4 | 59.0 |
| Methanol | 10.4 | 10.9 | 6.0 |
| Dimethylether | 12.7 | 9.9 | 2.7 |
| Carbon monoxide | 0.08 | 0.1 | 0.1 |
| Carbon dioxide | 0.03 | 0.2 | 0.2 |
| Hydrogen | <0.02 | 0.02 | 0.02 |
| | ~100 | ~100 | ~100 |

Typical hydrocarbon product distributions from partial conversion of methanol is shown in Table 2.

TABLE 2
Typical hydrocarbon product distribution from partial conversion of
methanol with fluid ZSM-5 catalyst

| Crystallite size | Large crystal | Small crystal | |
|---|---|---|---|
| Conversion, % | 66 | 70 | 88 |
| Hydrocarbon product, wt.% Methane and ethane | 1.5 | 5.0 | 2.6 |
| Ethylene | 22.0 | 9.7 | 9.5 |
| Propane | 3.8 | 2.9 | 2.8 |
| Propylene | 14.7 | 23.2 | 17.1 |
| Isobutane | 4.0 | 6.1 | 6.8 |
| N-Butane | 0.9 | 1.0 | 0.9 |
| Butenes | 5.4 | 13.7 | 12.0 |
| $C_5+$ | 47.7 | 38.4 | 48.3 |
| | 100.0 | 100.0 | 100.0 |

It is clear that for a process to make a large amount of ethylene, it is preferred to use fluid catalyst containing large crystal ZSM-5. While the data in Tables 1 and 2 show that it is feasible to carry out the methanol conversion process at temperatures as high as 400°C, it may not be desirable to do so since such operation leads to more extensive catalyst deactivation. Higher operating temperatures are feasible by

# 0 096 996

reducing the activity of the catalyst by, e.g., operating at a high coke level or by operating with a high silica/alumina ratio zeolite.

Product yields obtained by converting to gasoline and olefinic distillate the light olefins produced by partial methanol conversion process in the olefin conversion process described previously are shown in Table 3.

### TABLE 3
### Product yields

| | Olefinic products produced by methanol conversion over | | |
| --- | --- | --- | --- |
| | Large crystal catalyst | Small crystal catalyst | |
| Methanol conversion, % | 66 | 70 | 88 |
| Olefins converted in Olefin conversion process | $C_3$ & $C_4$ | $C_2$, $C_3$, $C_4$ | $C_3$, $C_4$ |
| Product yield, wt.% Methane+ethane | 1.6 | 5.1 | 2.7 |
| Ethylene | 22.0 | 3.4[1] | 9.5 |
| Propylene+propane[2] | 4.3 | 3.9 | 3.5 |
| Butenes+butanes[2] | 5.0 | 7.6 | 7.9 |
| $C_5$+gasoline[3] | 54.4 | 54.3 | 58 |
| 166°C+Olefinic distillate | 12.7 | 25.7 | 18.4 |

[1]Not all ethylene reacted in olefin conversion process.
[2]Stream contains very little propylene and butenes due to their essentially complete conversion in process to make gasoline and distillate.
[3]$C_5$+gaslone containing $C_5$+gasoline produced during methanol conversion and $C_5-166$°C gasoline produced during conversion of light olefins to gasoline and distillate.

The olefinic distillate may be hydrogenated to make finished diesel/jet fuel. As shown in Table 3, the gasoline/distillate ratio can be varied considerably by changing either the methanol conversion level or the catalyst crystal size. Obviously, higher yields of propylene could be obtained by simply not feeding all of the propylene to the olefin conversion process. In addition, higher yields of distillate could be obtained by recycling the olefinic gasoline produced by the olefin conversion process back to the reactors.

While the data shown were obtained with methanol feed containing 17 wt.% water, it is not necessary to dilute the methanol feed further with water. This is a major advantage of carrying out the methanol conversion process in a fluid bed reactor.

It is also noted that the $C_5$+hydrocarbons produced by methanol conversion contain a substantial amount of aromatic compounds, which could be removed for petrochemical use.

## Claims

1. A process for converting reactants comprising lower alcohols and related oxygenates into a product mixture comprising light olefins and $C_5$+ gasoline boiling components, which comprises passing a suspension of vaporized reactant material and fluid catalyst particles comprising a crystalline zeolite upwardly through a dispersed catalyst contact and reaction zone at a temperature from 260 to 510°C and a pressure of from 170 to 515 kPa to achieve at least 40% but less than 90% conversion of the alcohol in the feed.

2. A process in accordance with claim 1, wherein the temperature is from 315 to 370°C.

3. A process in accordance with claim 1 or claim 2, wherein the fluid catalyst particles are continuously cooled by withdrawing a portion of the particles from the reaction zone, cooling the particles and returning the cooled catalyst particles to the reaction zone.

4. A process in accordance with claim 3, wherein the catalyst is cooled to a temperature of 28 to 83°C below the reaction zone temperature but not below 260°C.

5. A process in accordance with any one of claims 1 to 4, wherein the crystalline zeolite is ZSM-5.

6. A process in accordance with claim 5, wherein the ZSM-5 has a crystal size of 0.5 to 4 micrometers.

9

**0 096 996**

7. A process in accordance with any one of claims 1 to 4, wherein the crystalline zeolit eis ZSM-34.

8. A process in accordance with any one of claims 1 to 7, wherein the zeolite has been pretreated by steaming.

**Patentansprüche**

1. Verfahren zur Umwandlung von Reaktanten, die niedere Alkohole und damit verwandte Oxidationsprodukte bzw. sauerstoffhaltige Produkte enthalten, in eine Produktmischung, die leichte Olefine und $C_5+$ -Benzinsiedekomponenten umfaßt, wobei eine Suspension des verdampften reaktanten Materials und strömender Katalysatorpartikel, die einen kristallinen Zeolith umfassen, bei einer Temperatur von 260 bis 510°C und einem Druck von 170 bis 515 kPa nach oben durch eine Kontakt- und Reaktionszone mit dispergiertem Katalysator geleitet wird, um eine zumindest 40 %ige jedoch kleiner als 90 %ige Umwandlung des Alkohols in der Zufuhr zu erreichen.

2. Verfahren nach Anspruch 1 worin die Temperatur von 315 bis 370°C beträgt.

3. Verfahren nach Anspruch 1 oder 2, worin die strömenden Katalysatorpartikel kontinuierlich gekühlt werden, indem ein Teil dieser Partikel aus der Reaktionszone abgezogen wird, diese Partikel gekühlt werden und diese gekühlten Katalysatorpartikel zur Reaktionszone zurückgeführt werden.

4. Verfahren nach Anspruch 3, worin der Katalysator auf eine Temperatur von 28 bis 83°C unter der Temperatur der Reaktionszone, jedoch nicht unter 260°C abgekühlt wird.

5. Verfahren nach einem der Ansprüche 1 bis 4, worin der kristalline Zeolith ZSM-5 ist.

6. Verfahren nach Anspruch 5, worin der ZSM-5 eine Kristallgröße von 0,5 bis 4 Mikrometer aufweist.

7. Verfahren nach einem der Ansprüche 1 bis 4, worin der kristalline Zeolith ZSM-34 ist.

8. Verfahren nach einem der Ansprüche 1 bis 7, worin der Zeolith durch Dampfbehandlung vorbehandelt wurde.

**Revendications**

1. Un procédé de conversion de réactifs comprenant des alcools et des dérivés oxygénés correspondants en un mélange de produits contenant, comme composants, des oléfines légères et des composants bouillant à la température de l'essence en $C_5^+$ qui consiste à faire monter une suspension de réactifs vaporisés et de particules de catalyseurs fluidisées comprenant une zéolite cristalline à travers une zone de contact et de réaction renfermant un catalyseur dispersé à une température de 260 à 510°C et une pression de 170 à 515 kPa pour obtenir au moins 40%, mais moins de 90%, de conversion de l'alcool contenu dans la charge.

2. Un procédé selon la revendication 1, dans lequel la température est comprise entre 315 et 370°C.

3. Un procédé selon la revendication 1 ou 2, dans lequel les particules de catalyseurs fluidisées sont refroidis en continu par prélèvement d'une partie de ses particules dans la zone de réaction, refroidissement des particules et recyclage des particules de catalyseur refroidi dans la zone de réaction.

4. Un procédé selon la revendication 3, dans lequel le catalyseur est refroidi à une température de 28 à 83°C inférieure à celle de la zone de réaction, sans être inférieure à 260°C.

5. Un procédé selon l'une quelconque des revendications 1 à 4, dans lequel la zéolite cristalline est la ZSM-5.

6. Un procédé selon la revendication 5, dans lequel la ZSM-5 présente une dimension de cristaux comprise entre 0,5 et 4 μm.

7. Un procédé selon l'une quelconque des revendications 1 à 4, dans lequel la zéolite cristalline est la ZSM-34.

8. Un procédé selon l'une quelconque des revendications 1 à 7, dans lequel la zéolite a subi un prétraitement à la vapeur.

F I G. I

FIG.2